(19) Europäisches Patentamt
European Patent Office
Office européen des brevets

(11) Publication number: **0 353 007 A2**

(12) **EUROPEAN PATENT APPLICATION**

(21) Application number: 89307511.9

(22) Date of filing: 24.07.89

(51) Int. Cl.[5]: **C 09 B 23/02**
**G 11 B 7/24**

(30) Priority: 27.07.88 GB 8817897

(43) Date of publication of application: 31.01.90 Bulletin 90/05

(84) Designated Contracting States: DE FR GB NL

(71) Applicant: MINNESOTA MINING AND MANUFACTURING COMPANY
3M Center
Saint Paul, Minnesota 50101 (US)

(72) Inventor: Evans, Christopher Miles
c/o Minnesota 3M Research Ltd. Pinnacles
Harlow Essex CM19 5AE (GB)

Jackson, Andrew Clive
1, Primley Lane Sheering
Bishop's Stortford Hertfordshire (GB)

(74) Representative: Bowman, Paul Alan et al
LLOYD WISE, TREGEAR & CO. Norman House 105-109 Strand
London WC2R OAE (GB)

(54) **Polymethine dyes suitable for optical recording media.**

(57) Polymethine dyes suitable for use in optical recording medium, which are soluble in alcohol and have a nucleus of the general formula:

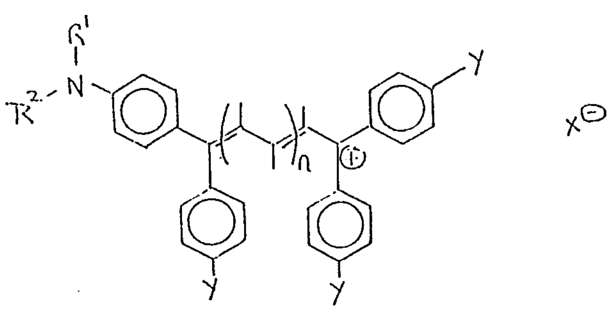

in which:
n is 0 or an integer,
$R^1$ and $R^2$ independently represent alkyl groups of up to 30 carbon atoms with the proviso that either at least one of $R^1$ and $R^2$ contains more than 4 carbon atoms or $R^1$ and $R^2$ together represent the necessary atoms to complete a cyclic structure including the nitrogen atom to which they are attached,
each Y is the same and represents a hydrogen atom, an alkoxy group of up to 12 carbon atoms or a dialkylamino group which is different to the

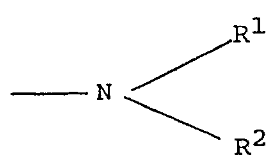

group,
and
$X^{\ominus}$ represents an anion.

EP 0 353 007 A2

## Description

# POLYMETHINE DYES SUITABLE FOR OPTICAL RECORDING MEDIA

This invention relates to polymethine dyes suitable for use in optical recording elements in which information can be recorded and read by means of laser light. One aspect of the invention relates to optical recording elements comprising a substrate having on at least one side a recording layer including one or more compounds selected from a particular class of polymethine dyes.

Continuing advances in information handling technology have led to the requirement for data storage and retrieval systems capable of handling extremely large volumes of information. A proposed method for satisfying this demand is that of optical recording, in particular optical disc recording, which allows recording and accessing of information at very high data rates with a much greater recording density and archivability than is possible with available magnetic recording systems. A highly focussed laser beam is utilized to record and recover information on the optical recording media. The selection and alignment of diode lasers into an optical recording system is discussed by Bartolini et al. in I.E.E.E. Journal of Quantum Electronics, 1981, p.69, and both read and write apparatus are disclosed in British Patent Application No. 2,016,747A.

Many types of recording media have been disclosed for laser writing and these can be divided into two basic sorts: those which require processing after writing and those which can be read immediately after writing. It is the latter type, possessing "direct read after write" capability and commonly known as "DRAW" media, which are of particular interest.

In order to be useful as a light absorbing layer for the recording element, materials must be able to be applied to a substrate in the form of a thin, smooth layer of high optical quality and predetermined thickness and they must absorb at the frequency of the optical source. Various materials have been proposed for the recording media of DRAW systems, including, for example, thin metal films, metal-impregnated polymers and organic dyes. In these cases the laser beam provides a pulse of heat energy to the recording medium which causes a change in surface morphology; i.e., formation of a bump or crater, by ablation, vaporization or melting.

The most common DRAW media which are commercially available utilize thin metal films and, of these, tellurium containing mixtures as disclosed in Lou et al., J. Vac. Sci. Technol., 1981, 18, 78, are widely used. However, the preparation of recording elements incorporating tellurium is by a relatively expensive vacuum sputtering technique in which the metal does not adhere well to the substrate. The much less expensive to manufacture, organic dye based media are attractive alternatives, providing suitable materials may be found.

As well as providing advantages of cost, the thermal properties of organic compounds are generally superior to those of metals since they possess lower thermal conductivities and more appropriate melting/decomposition temperatures. In dye based systems it is important that the absorption/reflection spectrum of the dye corresponds as closely as possible with the emission of the recording laser. Of the various lasers available, semi-conductor laser diodes, as compared to conventional gas lasers, have advantages of low cost and compact size, and possibility of signal modulation. The problem is the finding of organic materials which have all the requisite physical properties and which absorb strongly in the region compatible with laser diodes; i.e. the near infrared between 700 and 1400nm.

The preferred method of fabricating optical recording media utilising an organic dye as the light absorber is by a solvent coating technique, such as spin coating, and accordingly suitable dyes must possess some solubility in suitable solvents.

In one construction known as air incident (AI), the dye layer is coated onto a reflectorized substrate. Typically, the reflectivity is provided by an evaporated film of a metal such as aluminium. During recording, portions of the dye layer are ablated by an air-incident intensity modulated laser beam, thereby exposing portions of the reflective metal film and recording data as a reflectivity pattern.

The current trend within the optical recording industry is to move toward an air sandwich optical disk construction, as described by G. Bouwhuis et al in Principles of Optical DISC Systems, pub. Adam Hilger Ltd, 1985, P. 213-214. In this type of construction the laser beam passes through the substrate before striking the dye layer, a construction commonly referred to as substrate incident (SI).

The substrates used for substrate incident constructions can be made from a variety of materials (e.g. glass or polymers) as long as they are transparent at the operating wavelength of the laser. The use of an injection molded polycarbonate substrate is desirable for reasons of low birefringence and low cost. Grooves, or other surface features, can be built into the substrate at the moulding stage to facilitate tracking of the laser, indexing of the information, etc. Unfortunately these polycarbonate disks are very susceptible to attack by aggressive solvents such as chlorinated hydrocarbons, ketones, esters or aromatics which remove the grooves from the disk surface. In practice the disks are resistant only to water, lower alcohol and lower alkane solvents. Consequently many dyes suitable for air incident constructions are not suitable for use in substrate incident constructions, since they are insoluble in the preferred solvents for use with polycarbonate substrates.

Several classes of organic dyes have been proposed for use in optical recording media of the types described above and are discussed by Kuder in J. Im. Technol., 1986, 12, 140. U.S. Patent 4,547,444 discloses the use of a class of near infrared absorbing cyanine dyes referred to as tetraarylpolymethine (TAPM) dyes in optical recording media. Similar compounds in optical recording constructions are disclosed in BASF, German

Patent 3,413,940, Japanese Patent 58,219,090 and European Patent Publication No. 183,311A. However, known dyes have failed to meet all of the strict requirements demanded of optical recording media. The reasons for failure are varied, but include poor solubility in suitable solvents, low light absorption and thermal and/or photochemical instability.

We have found a class of polymethine dyes which possess particularly desirable properties for use in optical recording media.

Therefore, according to the invention there is provided a dye having a nucleus of the general formula:

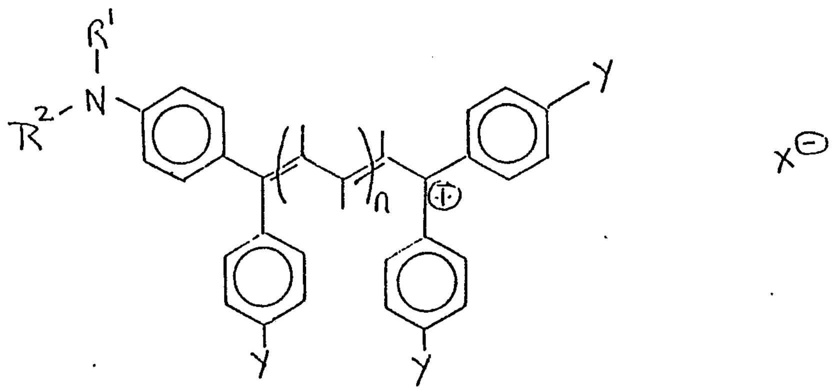

(I)

in which:

n is 0 or an integer, generally 1 or 2,

$R^1$ and $R^2$ independently represent alkyl groups of up to 30 carbon atoms with the proviso that at least one of $R^1$ and $R^2$ contains more than 4 carbon atoms or $R^1$ and $R^2$ together represent the necessary atoms to complete a cyclic structure including the nitrogen atom to which they are attached, e.g. a cyclic structure comprising a single ring of 5 to 7 atoms or a fused dicyclic ring of 9 to 12 atoms selected from C, N, S and O atoms, for example $R^1$ and $R^2$ may complete a morpholino group,

each Y is the same and represents a hydrogen atom, an alkoxy group of up to 12 carbon atoms or a dialkylamino group which is different to the

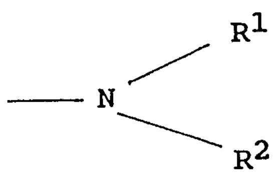

group and in which the alkyl groups contain up to 20 carbon atoms, preferably 1 to 5 carbon atoms, and $X^{\ominus}$ represents an anion.

In general, the dyes of the invention will have the general formula:

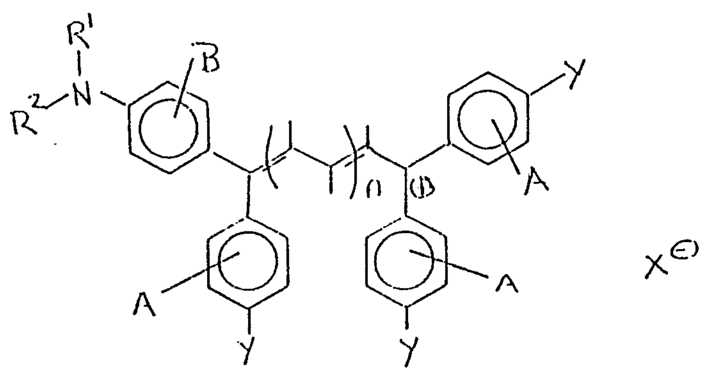

(II)

in which:

$R^1$, $R^2$, Y, $X^{\ominus}$ and n are as defined above,

A and B independently represent a hydrogen atom, one or more substituents on the phenyl ring each selected from halogen, alkyl, alkenyl, aryl, alkaryl and alkoxy groups generally of up to 12 carbon atoms optionally bearing substituents such as OH, halogen etc.; a fused ring system having 5 to 7 atoms in a single ring or up to 12 atoms in a dicyclic structure, the atoms comprising C, N, S and O atoms; or a bond or the atoms necessary to complete a 5, 6 or 7 membered cyclic structure with the adjacent Y group or polymethine chain, comprising atoms selected from C, N, S and O, e.g. A may complete a julolidyl group,

the free bonds on the polymethine chain being satisfied by substituents selected from hydrogen, halogen,

hydroxy, optionally substituted alkyl, optionally substituted aryl, or the necessary atoms to complete a 5, 6 or 7 membered carbocyclic or heterocyclic structure including three adjacent carbon atoms in the polymethine chain. The polymethine chain generally contains no more than two substituents other than hydrogen, preferably no more than one substituent and more preferably has only hydrogen atoms thereon.

The anion $X^{\ominus}$ may be an organic or inorganic ion. Suitable organic anions are those in which the conjugate acid thereof has a pKa value less than 7, preferably less than 3. Suitable inorganic ions include $FSO_3^{\ominus}$ and ions of the formula:

$MLx^{m\ominus}$

in which:

M represents B, Al, P, As, Sb or Zn, preferably B or P,

L represents a halogen, preferably F or Cl,

x=4, 5, or 6 and

m is 1 or 2.

Exemplary organic anions for $X^{\ominus}$ include alkyl-, alkenyl-, aryl- (including carbocyclic and heterocyclic) and polyoxyalkyl-carboxylic, -sulphonic, -phosphoric or -boric acids, any of which may be substituted, preferably with electron withdrawing groups; e.g., Cl, Br. Other suitable organic ions include phenols substituted with electron withdrawing groups; e.g., $NO_2$.

Suitable monocarboxylic acids from which the anion $X^{\ominus}$ may be derived include optionally substituted alkyl and alkenyl carboxylic acids containing from 1 to 25 carbon atoms; e.g., formic, acetic, propanoic, butyric, lauric, stearic, behenic, oleic and linoleic acids.

Other carboxylic acids from which the anion $X^{\ominus}$ may be derived include substituted carboxylic acids and aryl carboxylic acids; e.g., benzoic and nitrobenzoic acids.

The anion $X^{\ominus}$ may be derived from alkyl and aryl sulphonic or sulphinic acids; e.g., methyl-sulphonic acid, trichloromethyl-sulphonic acid and trifluoromethylsulphonic acid, p-ethyl-benzene-sulphonic acid.

$X^{\ominus}$ may also be selected from a range of inorganic ions as defined above. Preferred inorganic ions include $FSO_3^{\ominus}$, $BF_4^{\ominus}$ and $PF_6^{\ominus}$.

Preferably, $X^{\ominus}$ is derived from halo substituted alkyl or aryl carboxylic or sulphonic acids; e.g.,chloroalkyl carboxylic or sulphonic acids, fluoroalkyl carboxylic or sulphonic acids, bromo or iodo alkyl carboxylic or sulphonic acids, particularly trifluoromethyl sulphonic acid, perfluoropropanoic acid, perfluorobutyric acid, perfluoro octanoic acid.

The dyes of the invention have been found to possess unexpectedly high solubility in lower alcohols. e.g. ethanol, n-propanol and n-butanol. The dyes have absorption maxima in the near infrared region of the spectrum, together with high extinction coefficients. These properties make the dyes particularly suitable for use in optical recording media; they may be coated from solution eg. by spin coating, to form very thin recording layers with high optical density. Furthermore the dyes are compatible with a wide range of binders and may be employed in dye-binder optical recording media.

A particularly preferred class of dyes according to the invention are of the general formula

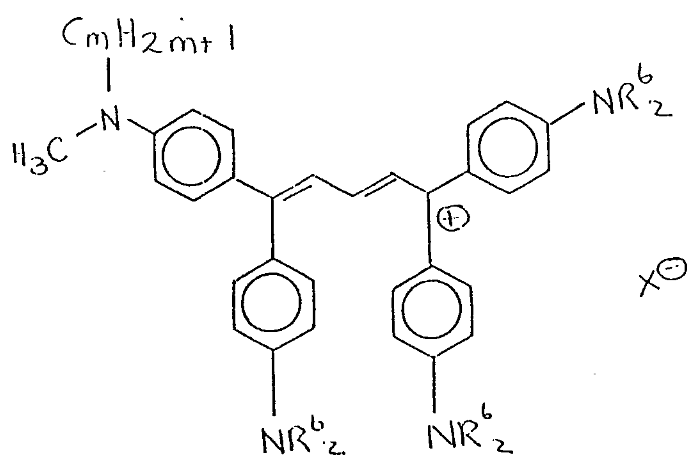

in which:

m is an integer greater than 4, generally in the range 6 to 20,

each $R^6$ is the same and represents a methyl or ethyl group and

$X^{\ominus}$ is an anion, preferably $CF_3SO_3^{\ominus}$, $FSO_3^{\ominus}$, $BF_4^{\ominus}$ or $CH_3C_6H_4SO_3^{\ominus}$.

These dyes have ethanol solubilities in excess of 1% and often in excess of 2%. The increase in alcohol solubility is particularly surprising since the addition of alkyl substituents to a molecule tends to increase hydrophobicity and would be expected to decrease the alcohol solubility.

The dyes of the invention may be synthesised by any of the general routes disclosed in the art. However, it has been found that the tetraarylpolymethine dyes may advantageously be prepared by the following reaction scheme.

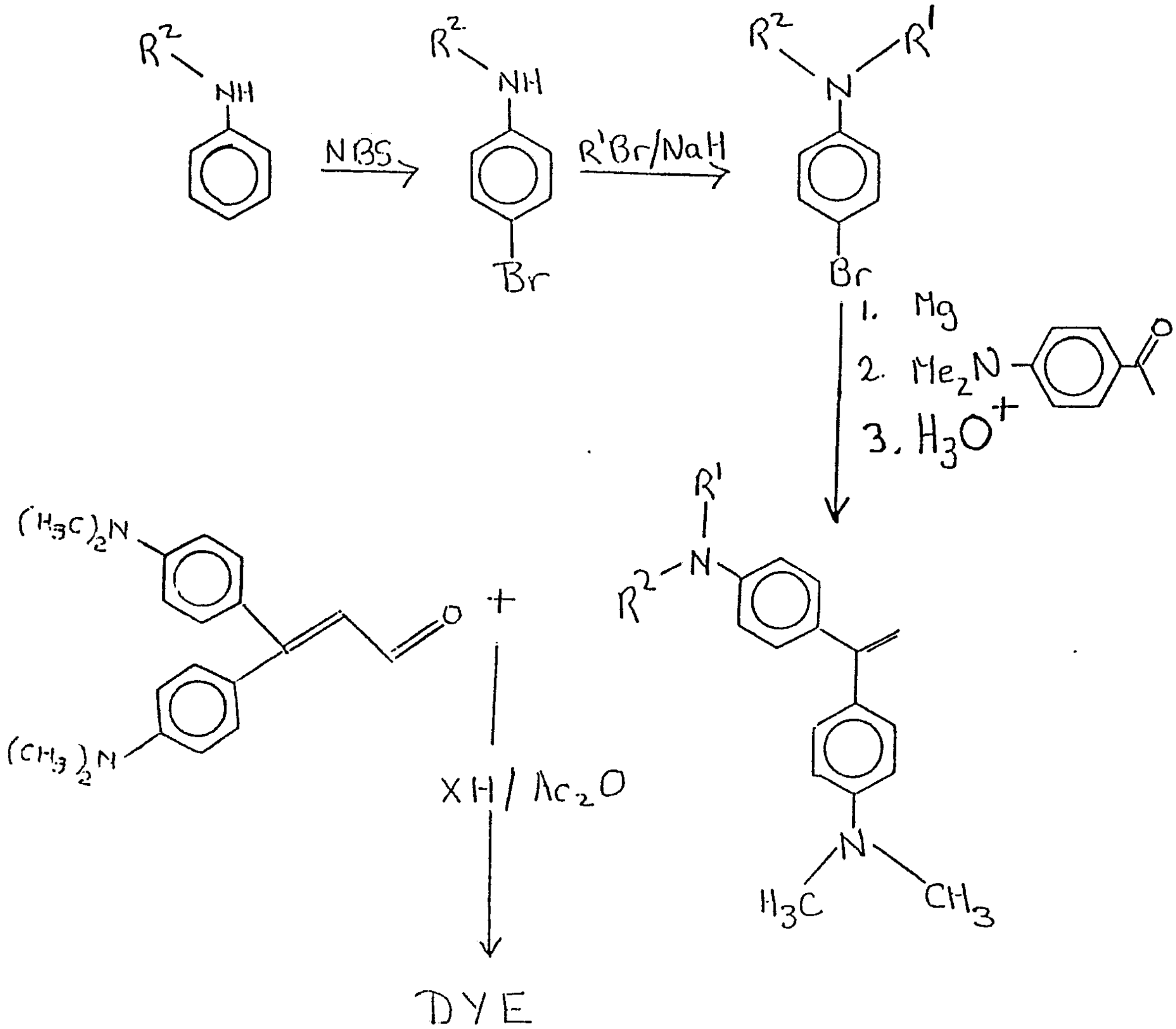


The following Table 1 reports the ethanol solubility of dyes of the invention (Dyes A to F which correspond to formula (II) above) compared with other known dyes of similar structure (Dyes G to K).

TABLE 1

| Dye | $R^1$ | $R^2$ | Y | A | $X^{\ominus}$ | Ethanol Solubility |
|---|---|---|---|---|---|---|
| A | $C_{18}H_{37}$ | $CH_3$ | $(CH_3)_2N$ | H | $CF_3SO_3^{\ominus}$ | >2% |
| B | $C_{12}H_{25}$ | " | " | " | " | >1% |
| C | $C_6H_{13}$ | " | " | " | " | >2% |
| D | $R_1+R_2$ = Morpholino | | " | " | " | ~0.5% |
| E | $C_6H_{13}$ | $CH_3$ | " | " | $CH_3C_6H_4SO_3^{\ominus}$ | >1% |
| F | " | " | " | " | $BF_4^{\ominus}$ | ~1% |
| G | $CH_3$ | " | " | " | $CF_3SO_3^{\ominus}$ | <0.2% |
| H | $C_4H_9$ | " | " | " | " | <0.5% |
| I | $C_{18}H_{37}$ | " | $C_{18}H_{37}(CH_3)N$ | " | " | ~0% |
| J | Structure below | | | | | <<0.1% |
| K | Structure below | | | | | <<0.1% |

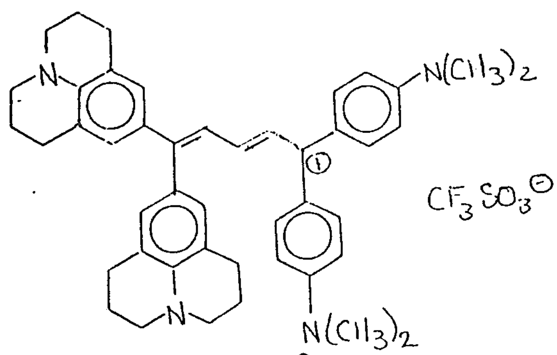

DYE J

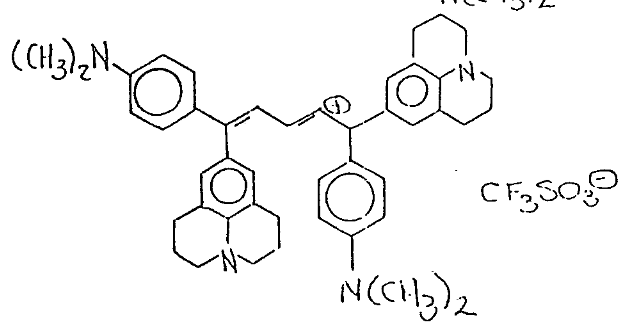

DYE K

The invention will now be illustrated by the following Examples.

EXAMPLE 1

Preparation of 4-dimethylaminoacetophenone, 1.

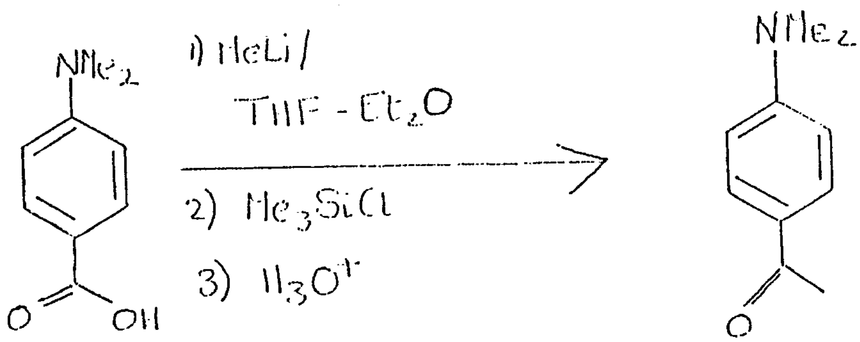


4-Dimethylaminobenzoic acid (20.48g, 0.124mol) was placed in a 3-necked 1-litre round-bottomed flask equipped with a stirring bar, a Y-shaped adapter bearing a septum cap on one branch and fitted with a nitrogen inlet on the other branch, a pressure-equalising dropping funnel, and a thermometer. The apparatus was flushed with a stream of nitrogen, and surrounded by an ice-bath. Dry tetrahydrofuran (THF) was then added until the acid was completely dissolved (750ml). 200ml of a 1.4M MeLi solution in ether, (0.28mol) was then added dropwise to the vigorously-stirred solution at a rate such that the reaction temperature did not exceed 5°C (1 to 1.5h for complete addition). A white precipitate formed after the first few drops of MeLi had been added.

After addition was complete, the mixture was allowed to warm slowly to room temperature, and stirring was continued overnight (18h).

The ice-bath was replaced, and the stirred mixture cooled to below 5°C. $Me_3SiCl$ (50ml) was added over 10 min, during which time a pale yellow solution formed, and the reacting temperature rose to almost 20°C. After the addition was complete, the ice-bath was removed, and the solution was allowed to stand for 0.5h. The solution was then poured into a stirred volume of 10% hydrochloric acid (200ml) and the resulting two-phase system was stirred for 1h. $NaHCO_3$ was then added to the stirred mixture until the aqueous phase was basic. The aqueous phase was separated, and extracted once with ether. The combined ethereal extracts were washed once with water, dried ($MgSO_4$) and evaporated in vacuo to give a yellow crystalline solid (19.23g).

Recrystallisation from ether (ether-petrol can be used) gave 3 crops of identical melting point (106.5 to 108°C) and appearance (pale yellow leaflets). Total yield (8.096g, 5.020g, 1.829g) 14.945g, 74%

$^1H$ NMR δ ($CDCl_3$) 7.84 (d,2, J=9Hz), 6.62 (d,2, J=9Hz), 3.06 (s,6), 2.51 (s,3);

$^{13}C$ NMR δ ($CDCl^3$) 196.0, 153.2, 130.3, 125.2, 110.4, 39.8, 25.7;

IR (Nujol) 1654, 1606, 1290, 1194, 822 $cm^{-1}$.

## EXAMPLE 2

Preparation of 1,1-Bis-4-dimethylaminophenyl)ethene 2

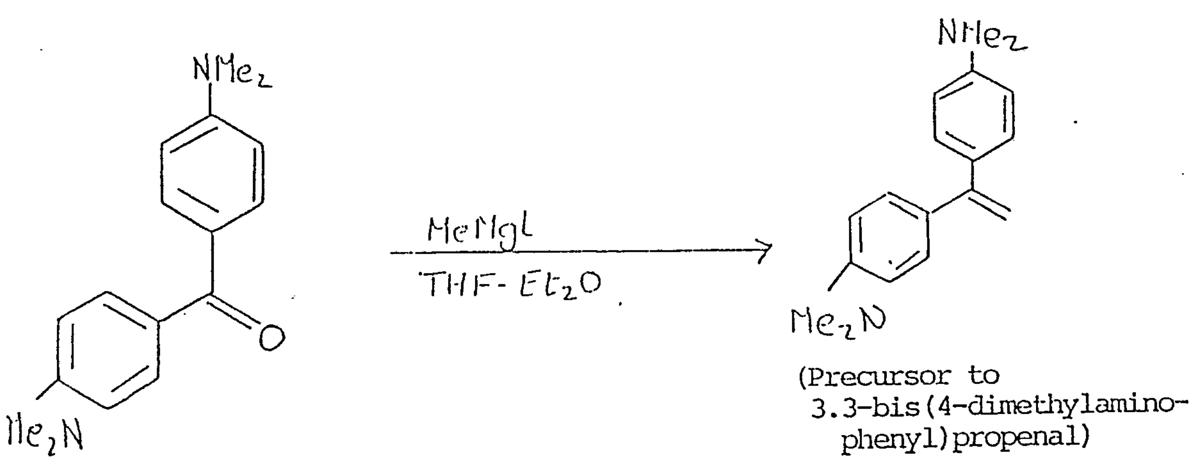


(Precursor to 3.3-bis(4-dimethylamino-phenyl)propenal)

Dry apparatus and a nitrogen blanket were utilized.

The Grignard reagent was made by controlled addition of MeI (205.5ml) in ether (220ml), to clean,

vacuum-dried Mg (80.3g) in ether (880ml). The addition and reaction took 2.5h, and ether (200ml) was then added to make good the loss from evaporation.

4,4′-Bis(dimethylamino)benzophenone (590g) was dissolved in dry THF (9 litres) by warming to ~50°C, and was added with good stirring over 3h to the Grignard. There was an initial vigorous reaction, and once the addition was complete the reaction flask was surrounded with a water bath at 40°C and stirred for 20h. Water (2 litres) was added slowly and then ether (2 litres) to form 2 layers. The aqueous part was an emulsion, and was extracted with ether (3x1 litre). Acetic acid (200ml) was added and extracted further with ether (1x1 litre).

All the organic extracts and the main organic phase were combined and washed with saturated brine (1.1 litre) dried over $MgSO_4$ and evaporated to dryness. The crude product was crystallised from EtOH (7 litres) giving a yield of 416g (71%).
Melting Point 123.4°C.

## EXAMPLE 3

### Preparation of 3,3-Bis(4-dimethylaminophenyl)propenal

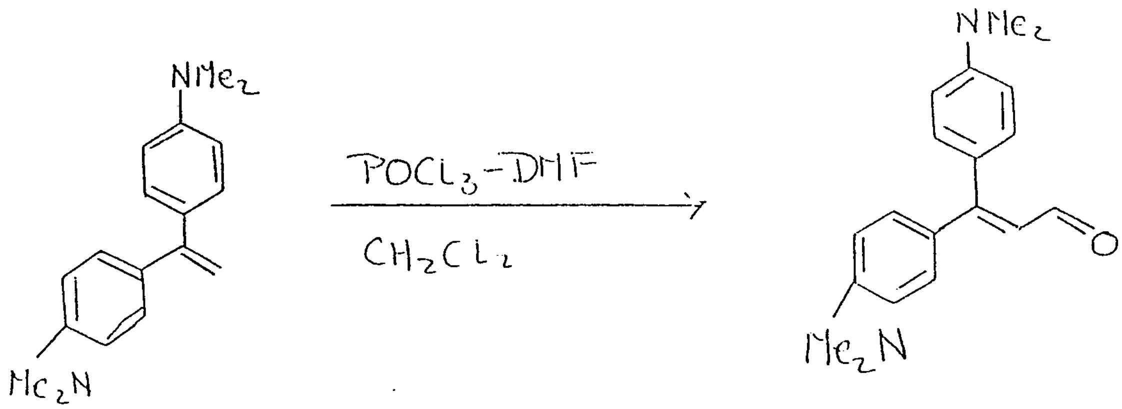


Dichloromethane (1 litre) and dimethylformamide (DMF) (175ml) were stirred together and cooled in an ice-bath. A solution of phosphoryl chloride (120ml) in dichloromethane (200ml) was then run in over a period of about 10min. Stirring was continued for 15min with cooling, and then a solution of 1,1-bis(4-dimethylaminophenyl)ethene (133g) in dichloromethane (1 litre) was run in fairly quickly. Finally, the mixture was stirred for 4h while being allowed to warm to room temperature.

The mixture was then poured into water (3 litres), stirred, and sodium hydroxide solution gradually added to begin to neutralise the mixture. After a time, solid began to separate. This solid is the rather insoluble trisodium phosphate, and if addition of the sodium hydroxide is continued, the whole mixture becomes solid and very difficult to work up. Therefore, before this happened, the organic layer was separated, and the aqueous layer washed once with dichloromethane. The combined organic layers were washed once with dilute sodium hydroxide solution, and then with water.

Without drying, the dichloromethane was distilled off at atmospheric pressure, removing the final traces in vacuo. The residue was a brown tarry solid.

Most of this solid is the free propenal, but some combined phosphoric acid is still present. This residue was boiled with ethanol (1.5 litres), and the ethanol solution decanted leaving a tarry residue. The ethanol solution was made alkaline to litmus with sodium hydroxide solution (20%; 120ml) and cooled overnight. The solid was filtered off to give approximately 100g of the propenal. Recrystallisation from ethanol gave 62g of product.
Melting Point = 181°C.

The tarry residue remaining after decantation of the hot ethanol solution was dissolved in water and made alkaline with sodium hydroxide solution (20%;80ml). The precipitated solid was filtered and recrystallised from ethanol to give 18g of slightly less pure product.
Melting Point = 180.8°C.

## EXAMPLE 4

### Preparation of 4-Bromo-N-methylaniline

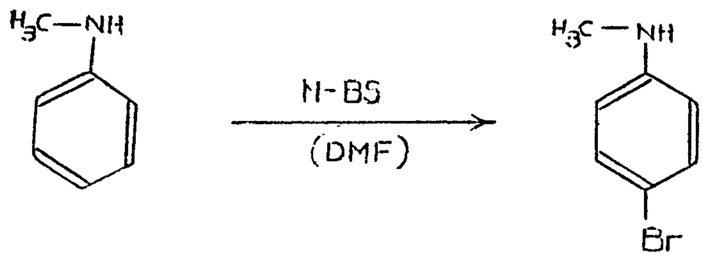


N-Bromosuccinimide (35.60g, 0.2mol) in DMF (400ml) was added dropwise over 1h to a cooled (ice-bath), stirred solution of N-methylaniline (21.44g, 0.2mol) in DMF (400ml). The mixture was stirred at room temperature overnight, then poured into water (2 litres) and extracted with petroleum ether (3 x 400 ml). The combined extracts were washed well with water, dried ($MgSO_4$), and evaporated in vacuo to give the desired compound as a liquid (29.00g, 78%).
'H NMR δ ($CDCl_3$) 7.22(d,2, J=9Hz), 6.45(d,2, J=HZ), 3.6 (br s, 1, NH), 2.80(s,3).

EXAMPLE 5

Preparation of 4-Bromo-N-methyl-N-octadecylaniline

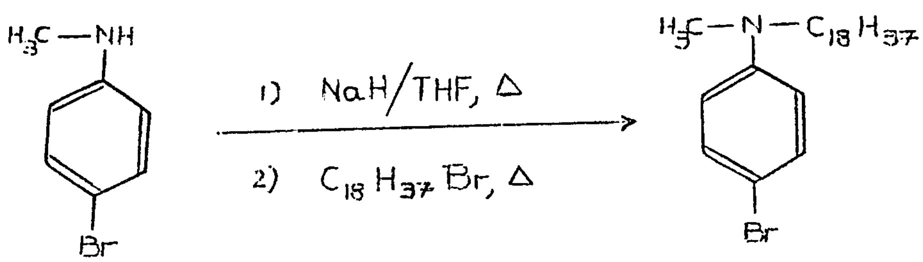


4-Bromo-N-methylaniline, from Example 4, (18.60g, 0.1mol) in dry THF (100ml) was added dropwise over 0.5h to a stirred suspension of 60% sodium hydride (5.0g, 0.125mol washed free of mineral oil with THF) in THF (50ml) at room temperature under nitrogen. Stirring was continued at room temperature for 0.5h, and then at reflux for 2h. The stirred mixture was allowed to cool, and a solution of 1-bromooctadecane (33.34g, 0.1mol) in dry THF (100ml) was then added dropwise over 0.5h. Stirring was continued at room temperature for 0.5h, and then at reflux overnight (16h). The cooled mixture was poured onto ice, and extracted with ether (2x100ml). The combined extracts were washed once with water, dried ($MgSO_4$) and evaporated in vacuo to give the desired product as a faintly-coloured powder (37.03g 84%):
'HNMR δ ($CDCl_3$) 7.23 (d,2, J=9HZ), 6.51 (d,2, J=9HZ), 3,27 (br t, 2, J=7Hz), 2.88 (s,3), 1.25 (m,35).

EXAMPLE 6

Preparation of 4-Bromo-N-hexyl-N-methylaniline

4-Bromo-N-hexyl-N-methylaniline was prepared in an analogous manner to Example 5 using 1-bromohexane in place of 1-bromooctadecane (95% yield)
'H NMR ($CDCl_3$) δ7.23 (d,2, J=9Hz), 6.51 (d,2, J=9Hz), 3.26 (br t, 2, J=8HZ), 2.89 (s,3), 1.28(m,8), 0.88 (m,3)

EXAMPLE 7

Preparation of 1-(4-N,N-Dimethylaminophenyl)-1-(4-(N-methyl-N-octadecyl) aminophenyl)ethene

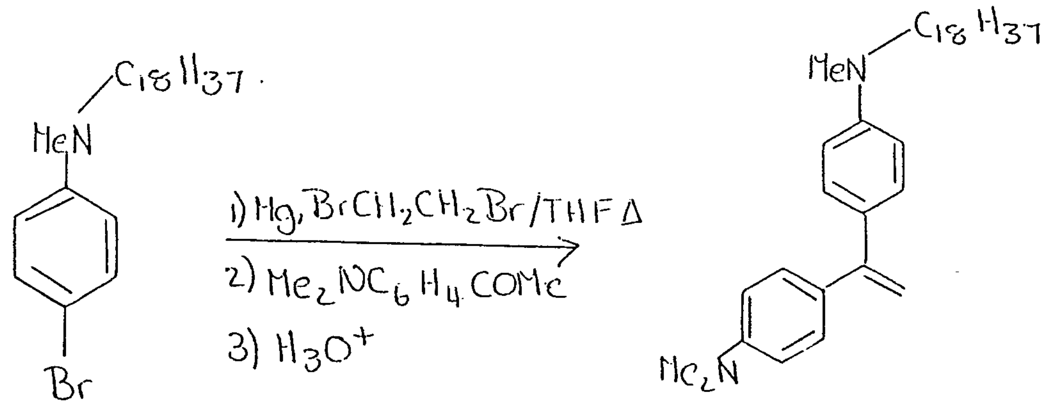


Mg turnings (5.4g, 0.22mol) were placed in a dry 3-necked 1-litre round-bottomed flask equipped with a stirring bar, a condenser surmounted by a nitrogen inlet, a septum cap, and a pressure-equalising dropping funnel. The apparatus was flushed with a stream of nitrogen, and dry THF (50ml) added. The stirred suspension was brought to reflux, and a solution of 4-bromo-N-methyl-N-octadecylaniline from Example 5 (43.5g, 0.10mol) and 1,2- dibromoethane (18.79g, 0.10mol) in dry THF (75ml) was added dropwise over 0.5 to 1h. After addition was complete, heating was continued for a further 1 to 1.5h by which time virtually all the Mg had reacted. The stirred suspension was allowed to cool to room temperature, and a solution of 4-dimethylaminoacetophenone (13.874g, 0.085mol) in dry THF (100ml) was then added dropwise over 1 to 1.5h. Stirring was continued at room temperature overnight (18h).

10% Hydrochloric acid (100ml) was added over 0.5h (moderately exothermic), and stirring was continued for a further 5h. The green solution was transferred to a 2-litre Erlenmeyer flask and diluted with water (250ml), and ether (250ml). $NaHCO_3$ (30g) was then added gradually to the stirred mixture to release the free base. The aqueous layer was separated and extracted once with ether. The combined ethereal extracts were washed successively with 10% $NaHCO_3$, and water, dried ($MgSO_4$), and evaporated in vacuo to give a sticky, dark yellow solid (48.24g). Acetone (250ml) was added to the crude product. The solid was broken up, and the mixture then left to stand overnight. A faintly-coloured crystalline powder was collected, washed with cold acetone (50ml), and dried in vacuo at 35 to 40° C, to give the pure title compound (16.915g). A further crop of pure product (1.091g) was obtained from the mother liquor on re-evaporation and crystallisation from acetone. The total yield of the title compound was 18.006g (42%).

$^1$H NMR δ ($CDCl_3$) 7.27 (d,2, J=9Hz), 7.21 (d,2, J=9Hz), 6.66 (d,2, J=9Hz), 6.60 (d,2, J=9Hz), 5.17 (br s, 2), 3.30 (br t, 2, J=7Hz), 2.96 (s,6), 2.94 (s,3), 1.25 (m,35).

## EXAMPLE 8

Preparation of 1-(4-N,N-Dimethylaminophenyl)-1-[4-hexyl-N-methylaminophenyl]ethene

1-(4-N,N-Dimethylaminophenyl)-1-[4-hexyl-N-methylaminophenyl]ethene was prepared in an analogous manner to Example 7 using 4-bromo-N-hexyl-N-methylaniline from Example 6 in place of 4-bromo-N-methyl-N-octadecylaniline. Purification was by chromatography on silica using 6:1 petrol-ether as eluant (yield 31%).

$^1$H NMR ($CDCl_3$) δ 7.24 (d,2, J=9Hz), 7.21 (d,2, J=9Hz), 6.66 (d,2, J-9Hz), 6.60 (d,2, J=9Hz), 5.16 (d,1, J=1.5Hz), 5.14 (d,1, J=1.5Hz), 3.31 (brt, 2, J=7Hz), 2.96 (s,6), 2.93 (s,3), 1.30 (m,8), 0.89 (m,3).

## EXAMPLE 9

Preparation of 1,1,5-Tris(4-N,N-dimethylaminophenyl)-5-(N-methyl-N-octadecylaminophenyl)-2,4-pentadienylium trifluoromethanesulphonate. (Dye A)

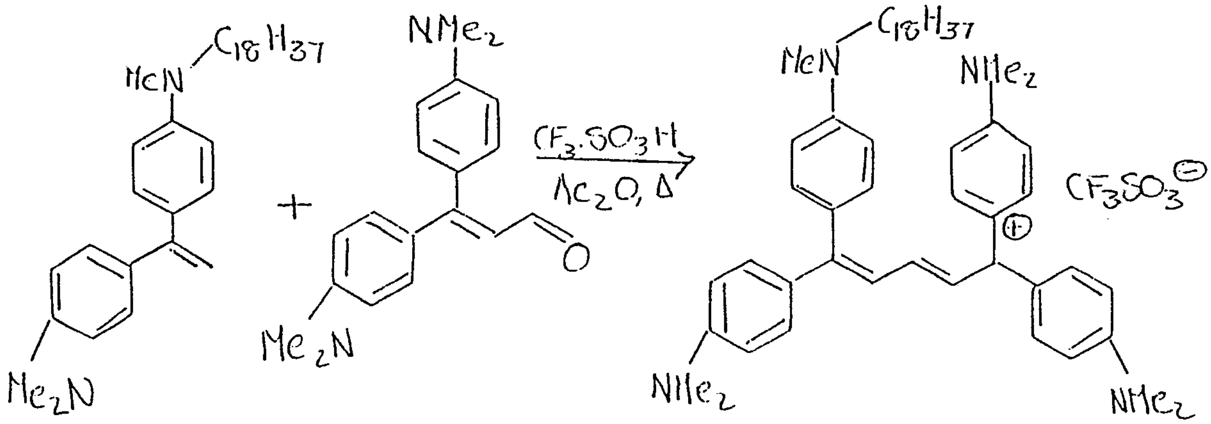


A solution of $CF_3SO_3H$ (4.952g, 0.033mol) in acetic anhydride (67ml) was added dropwise over 10 mins to a vigorously-stirred mixture of the ethene (16.660g, 0.033mol), 3,3-bis(4-dimethylaminophenyl)propenal from Example 3 (9.715g, 0.033mo1), and acetic anhydride (67ml) at room temperature under nitrogen. The mixture was heated to 90° C, and stirred for 3h. The intensely blue-coloured solution that formed was then allowed to stand cooling overnight.

The precipitate (1.8g) which formed on cooling was removed by filtration. The filtrate was treated carefully with methanol (150ml), then allowed to stand overnight. Solvent evaporation in vacuo gave an oil. The oil was dissolved in chloroform (500ml) and the solution washed with water (3 x 500ml) to remove acetic acid, dried ($MgSO_4$), and evaporated in vacuo to give a purple reflective solid (26.62g). This material (26.41g) was dissolved completely in hot ethyl acetate (350ml), then allowed to stand cooling overnight.

The precipitate was collected, washed with ether, and dried in vacuo at 40° C to give the desired product as a gold/brown powder (17.814g, 58%).

λ max (MeOH) 802nm ($1.34 \times 10^5$).

## EXAMPLE 10

Preparation of 1,1,5-Tris(4-N,N-dimethylaminophenyl)-5-(N-methyl-N-hexylaminophenyl)-2,4-pentadienylium trifluoromethanesulphonate. (Dye C)

1,1,5-Tris(4-N,N-dimethylaminophenyl)-5-(N-methyl-N-hexylaminophenyl)-2,4-pentadienylium trifluoromethanesulphonate was prepared in an analogous manner to Example 9 using 1-(4-N,N-dimethylaminophenyl)-1-[4-hexyl-N-methylaminophenyl]ethene from Example 8. Work up was by adding an equal volume of methanol, slowly and with extreme care, to the hot reaction mixture, which was then allowed to stand cooling overnight. Filtration of the cooled mixture confirmed that no precipitate had formed. The filtrate was added dropwise to a vigorously-stirred volume of ether (50 volumes). The tar that deposited was isolated (decantation), and washed well with ether. Extraction into chloroform, and evaporation gave purple reflective crystals.

The crude product was dissolved completely in hot 2-propanol, filtered, and allowed to stand cooling overnight. A tar again was deposited, and was dissolved in dichloromethane. The solvent was removed, and the residual reflective purple crystals dried in vacuo at 55°C to give the desired product (yield 65%)

λ max (MeOH) 800nm ($1.23 \times 10^5$);

Melting Point = 93°C (DSC), decomp. 212°C.

## EXAMPLE 11

Preparation of 1,1,5-Tris(4-N-N-dimethylaminophenyl)-5-(N-methyl-N-hexylaminophenyl)-2,4-pentadienylium-p-toluene sulphonate. (Dye E)

Dye C (6.10g 8mM) was dissolved in a mixture of ethanol (75ml) and toluene (75ml) and the solution stirred during the addition of a solution of sodium hydroxide (0.53g 13mM) in water (10ml). The resultant solution was stirred for a further 15 minutes before pouring into water (100ml). The organic phase was separated, washed with water (50ml) and dried over sodium sulphate.

To half the above solution was added a solution of p-toluene sulphonic acid hydrate (0.89g 4.7mM) in ethanol (20ml). The blue solution was concentrated in vacuo to give a blue brown solid. This solid was suspended in ether, collected by filtration, washed well with ether and dried in vacuo, to give Dye E as a blue

brown powder (2.77g 88%).
λ max (methanol) 800nm ($1.13 \times 10^5$).

## EXAMPLE 12

Preparation of 1,1,5-Tris(4-N,N-dimethylaminophenyl)-5-(N-methyl-N-hexylaminophenyl)-2,4-pentadienylium tetrafluoroborate (Dye F)

Dye F was prepared from Dye C using a similar method to that described in Example 11 replacing the solution of p-toluene sulphonic acid with fluoroboric acid (0.8g of 48 wt% aqueous solution 4.4mM) in ethanol (20ml).

## EXAMPLE 13

A solution of Dye C in ethanol (1% solids) was spin coated onto an injection molded grooved polycarbonate 5.25 inch disk. The resulting disk was subsequently tested in the substrate incident mode using dynamic media characterisation apparatus similar to that described in Proc. SPIE 1983, 382, 157-162.

A pattern of pits was written with 10mW incident 830nm laser power, modulated at 2.5MHz with a 50% duty cycle square wave. The pattern of pits was read back at a constant reduced laser power of 1.2mW, and the resultant carrier-to-noise ratio (CNR) was measured with a 30mHz resolution bandwidth using a spectrum analyser. Disk rotation speeds and test radii were chosen to give a linear velocity of approximately 8.5m/s. A CNR value of 54dB was obtained.

## EXAMPLE 14

A solution of dye C in n-butanol (2% solids) was spin coated onto an injection molded grooved polycarbonate disk and tested in a similar manner to that described in Example 13.
A CNR value of 53dB was obtained.

## EXAMPLE 15

A 0.94% total solids solution of Dye A (40% by weight), Desmodur L75 (30% by weight) and Desmophen 650 (30% by weight) in a 4:1 mixture of 1,2-dichloroethane and cyclohexanone was spin coated onto a grooved replicated polymethylmethacrylate substrate bearing an aluminium chrome reflector.

(Desmodur L75 is a multi-isocyanate and Desmophen 650 a branched polyester, both commercially available from Bayer AG.)

After curing for at least 18 hours at room temperature the disk was tested in air incident mode using the equipment described above. The written track was subsequently repeatedly read using a 1.2mW incident laser power.

No loss in CNR from the initial value of 50dB was observed over 580K read cycles.

## Claims

1. A dye having a nucleus of the general formula:

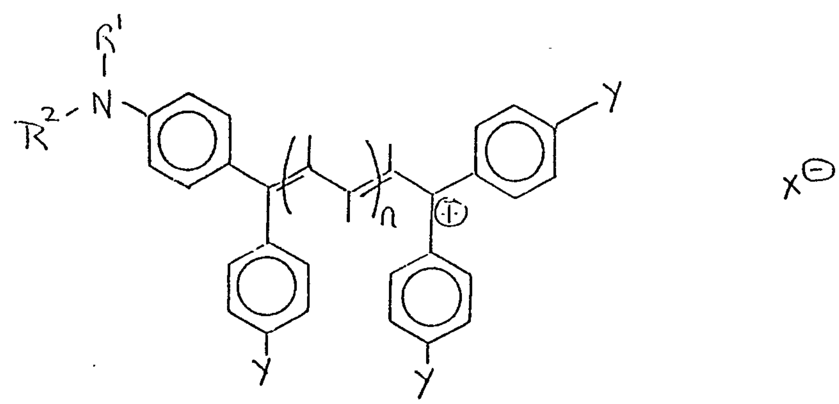

in which:

n is 0 or an integer,
$R^1$ and $R^2$ independently represent alkyl groups of up to 30 carbon atoms with the proviso that either at least one of $R^1$ and $R^2$ contains more than 4 carbon atoms or $R^1$ and $R^2$ together represent the necessary atoms to complete a cyclic structure including the nitrogen atom to which they are attached,
each Y is the same and represents a hydrogen atom, an alkoxy group of up to 12 carbon atoms or a dialkylamino group which is different to the

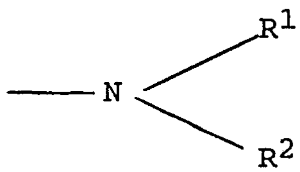

group,
and
$X^{\ominus}$ represents an anion.

2. A dye of the general formula:

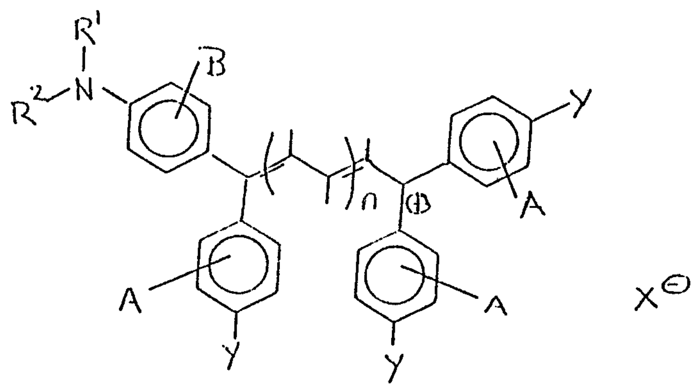

in which:
$R^1$, $R^2$, Y, $X^{\ominus}$ and n are as defined in Claim 1,
A and B independently represent a hydrogen atom, one or more substituents on the phenyl ring each selected from halogen; a group containing up to 12 carbon atoms selected from alkyl, alkenyl, aryl, alkaryl and alkoxy; a fused ring or bond or the atoms necessary to complete a 5, 6 or 7 membered cyclic structure with the adjacent Y group or polymethine chain,
the free bonds on the polymethine chain being satisfied by substituents selected from hydrogen, halogen, hydroxy, alkyl of up to 12 carbon atoms, aryl of up to 12 carbon atoms, or the necessary atoms to complete a 5, 6 or 7 member cyclic structure including three carbon atoms in the polymethine chain.

3. A dye as claimed in Claim 1 or Claim 2 in which $X^{\ominus}$ represents an organic ion, a conjugate acid or $FSO^{\ominus}_3$ or an inorganic ion of the formula:
$ML_x^{m\ominus}$
in which:
M represents B, Al, P, As, Sb or Zn,
L represents a halogen,
X=4, 5, or 6 and
m is 1 or 2.

4. A dye as claimed in Claim 1 or Claim 2 of the general formula

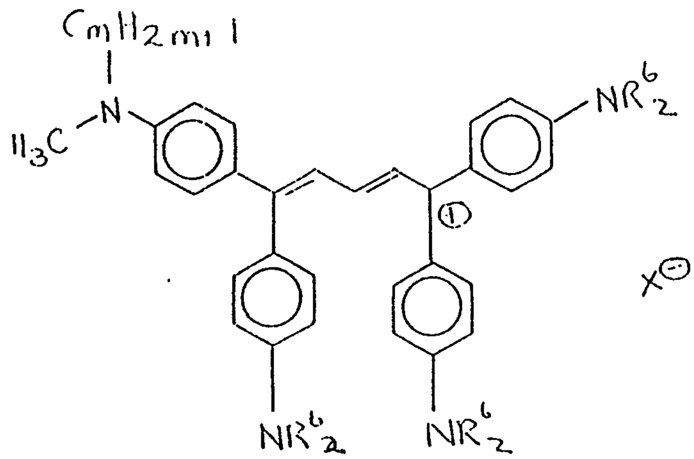

in which:
m is an integer greater than 4,
each $R^6$ is the same and represents a methyl or ethyl group and
$X^{\ominus}$ is selected from $CF_3SO_3^{\ominus}$, $FSO_3^{\ominus}$, $BF_4^{\ominus}$ and $CH_3C_6H_4SO_3^{\ominus}$.

5. An optical recording element in which the recording medium consists of a dye as claimed in any preceding claim.

6. An optical recording element in which the recording medium comprises a dye as claimed in any one of Claims 1 to 4.

7. An optical recording element as claimed in Claim 7 in which the recording medium additionally comprises a binder.

8. An optical recording element as claimed in any one of Claims 5 to 7 which is of a substrate incident construction.

9. An optical recording element as claimed in Claim 8 comprising a polycarbonate disk bearing the optical recording medium.

10. A method of preparing an optical recording element which comprises coating a substrate with an alcoholic solution of a dye as claimed in Claims 1 to 4 and optionally a binder, and allowing the solvent to evaporate.

11. A method as claimed in Claim 10 in which the coating is performed by spin coating.

12. A method as claimed in Claim 10 or Claim 11 in which the substrate is a polycarbonate disk.

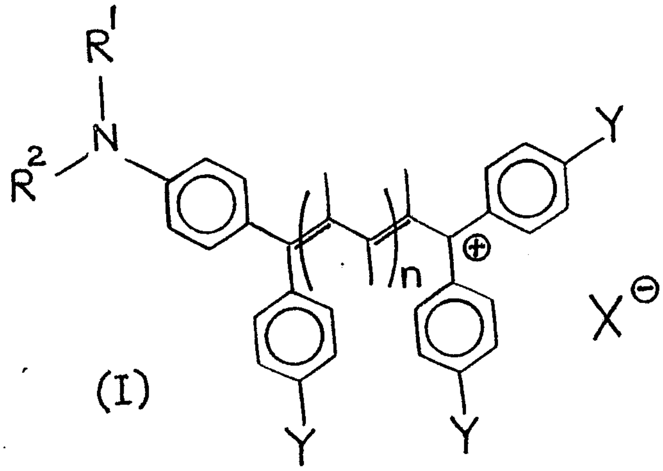

(I)

Page 5 General Formula (I)

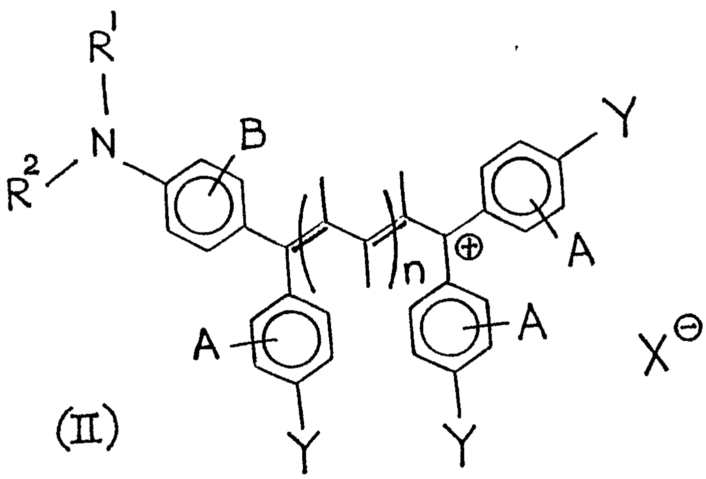

(II)

Page 6 General Formula (II)

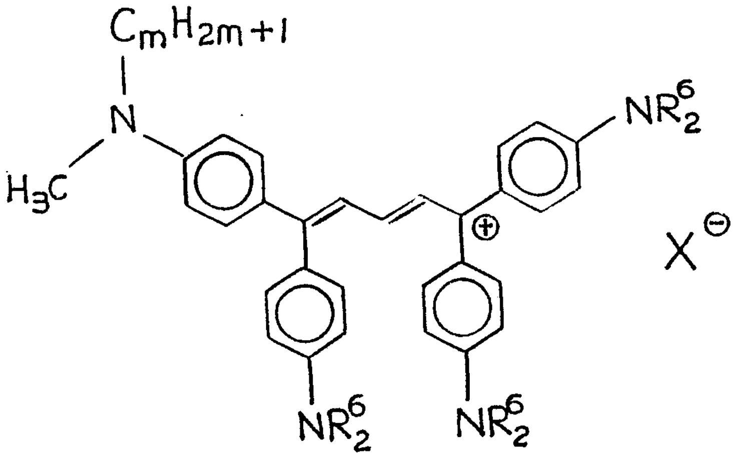

Page 9

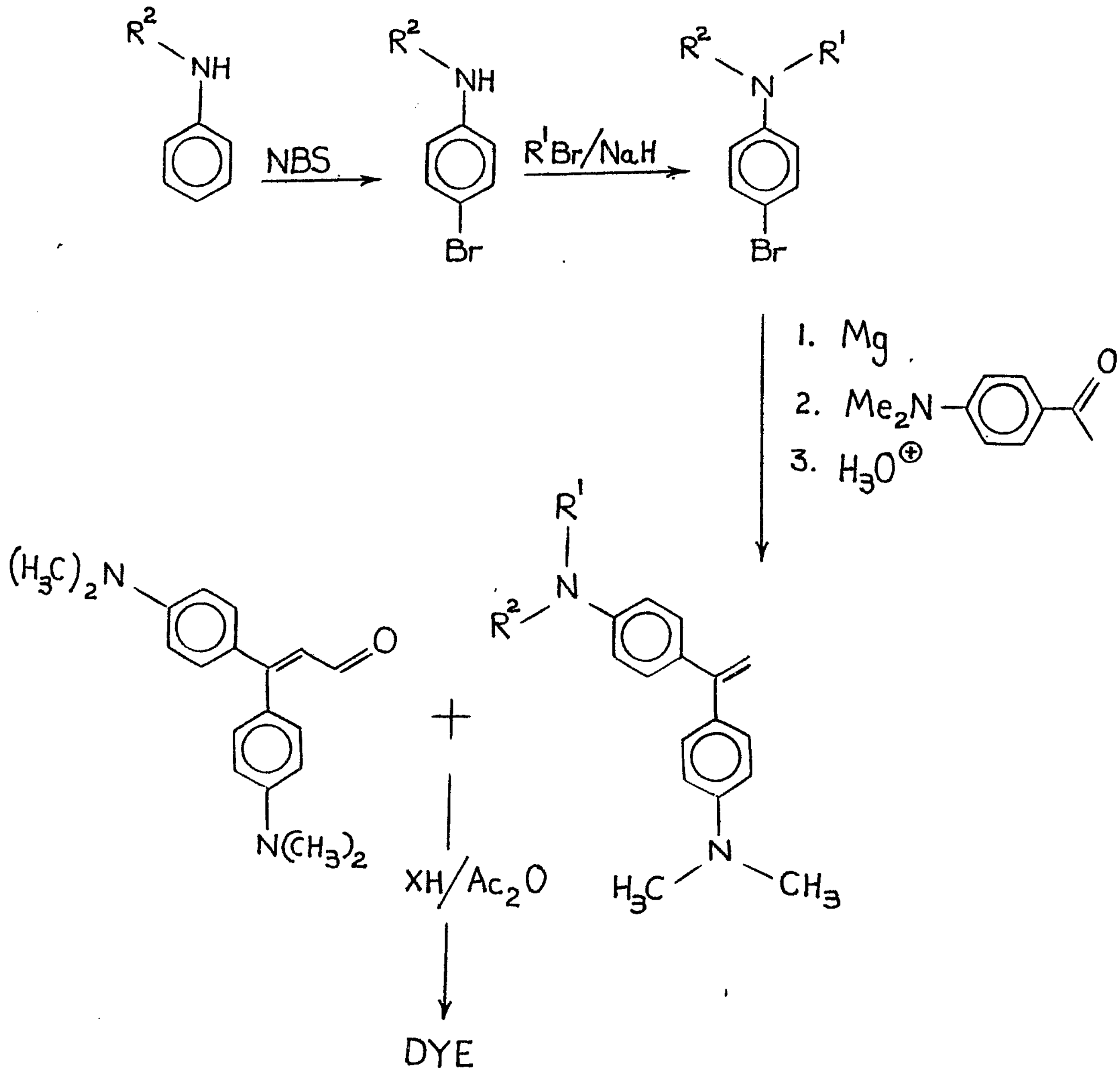


Page 10 Reaction Scheme

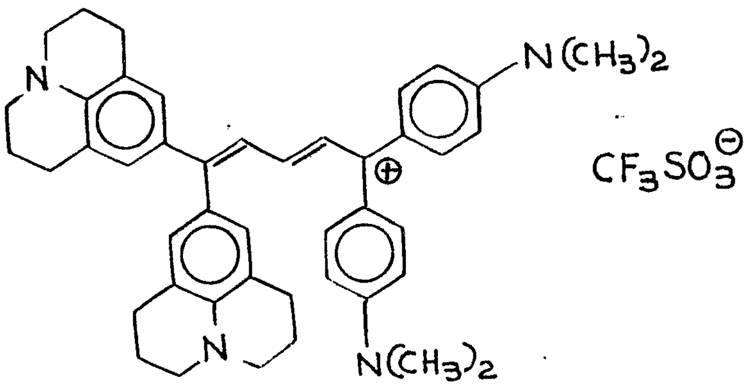

Page 11 Dye J

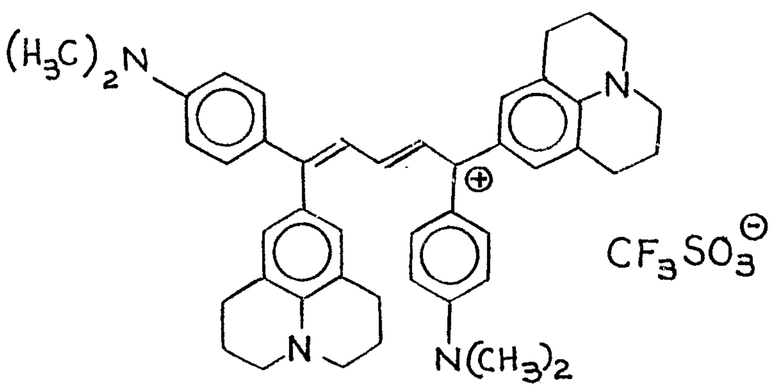

Page 11 Dye K

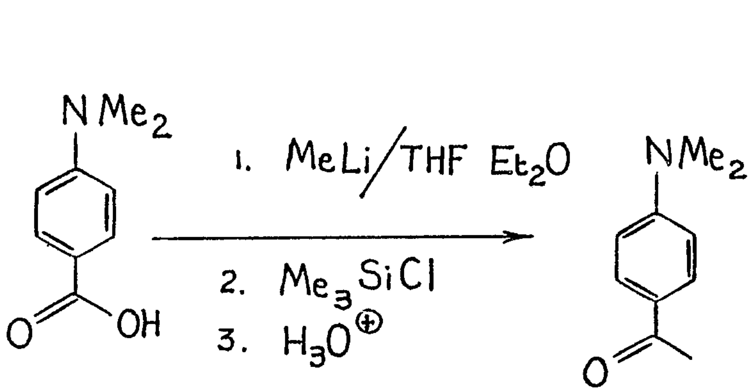


Page 12 Example 1.

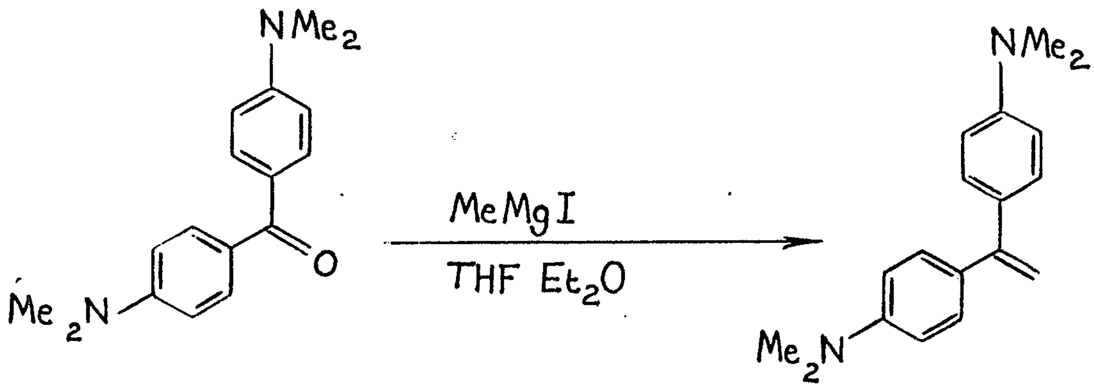


Page 14 Example 2.

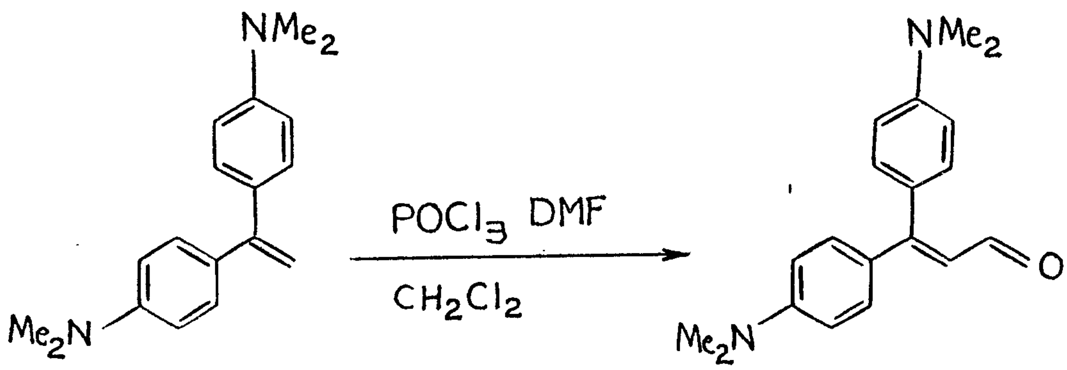


Page 15 Example 3.

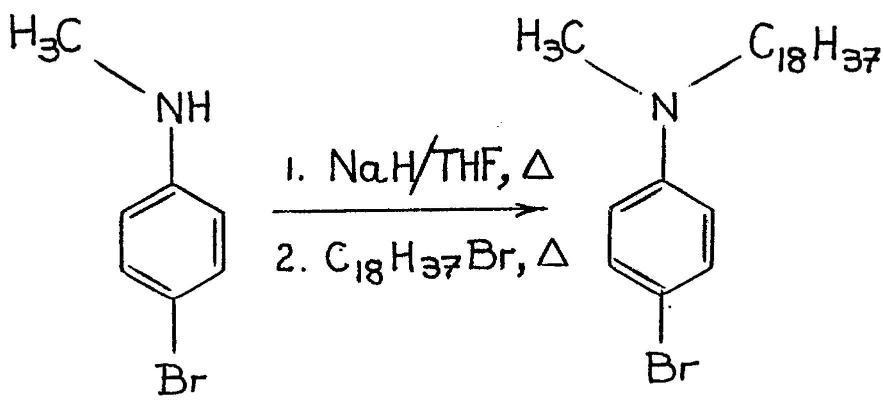


Page 18 Example 5.

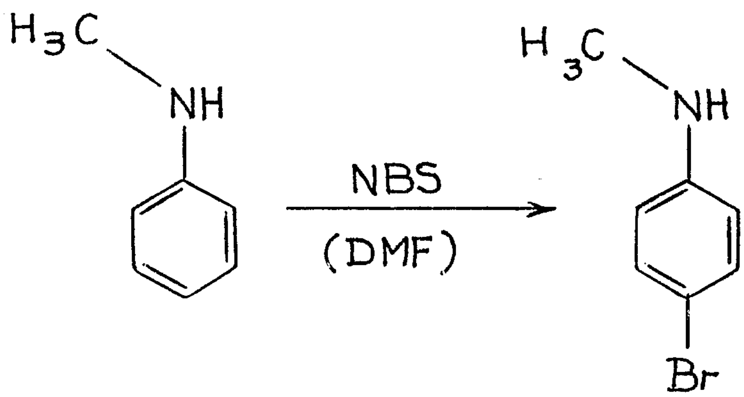


Page 17 Example 4.

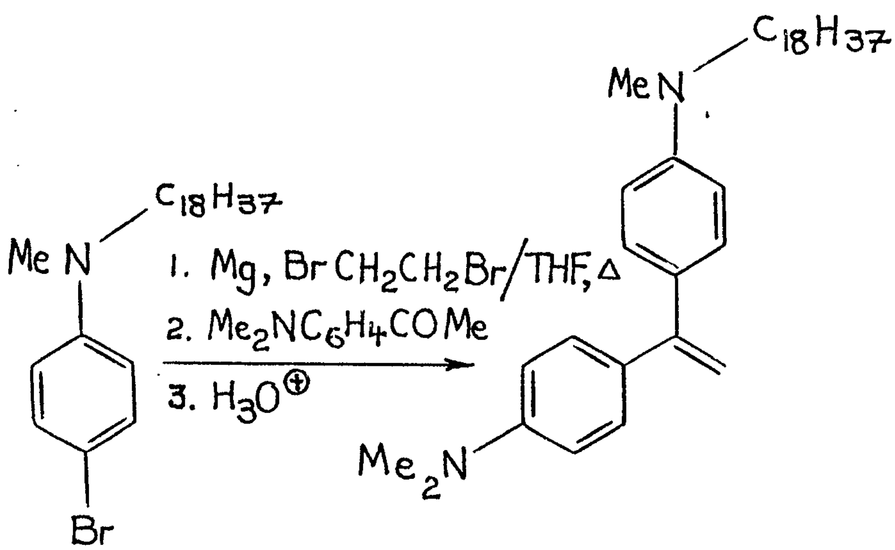


Page 19 Example 6.

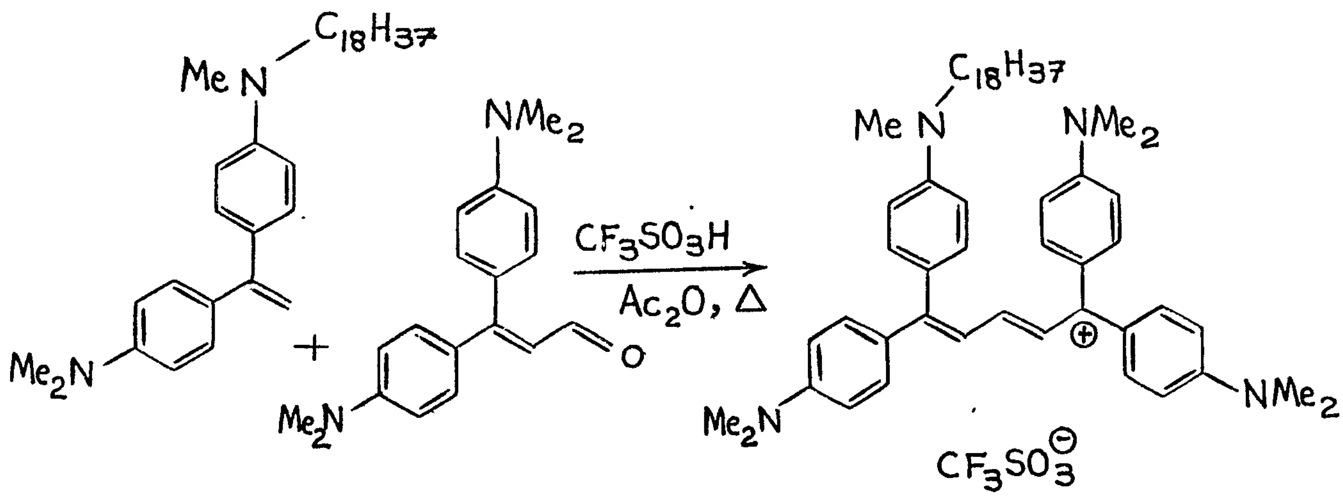


Page 21 Example 9

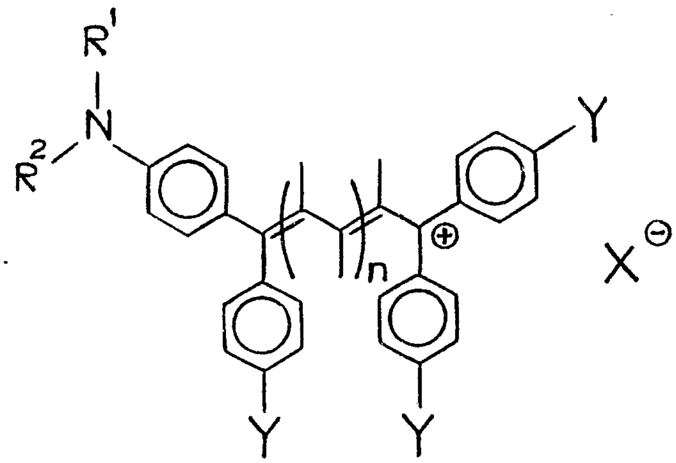

Page 26 Claim 1.

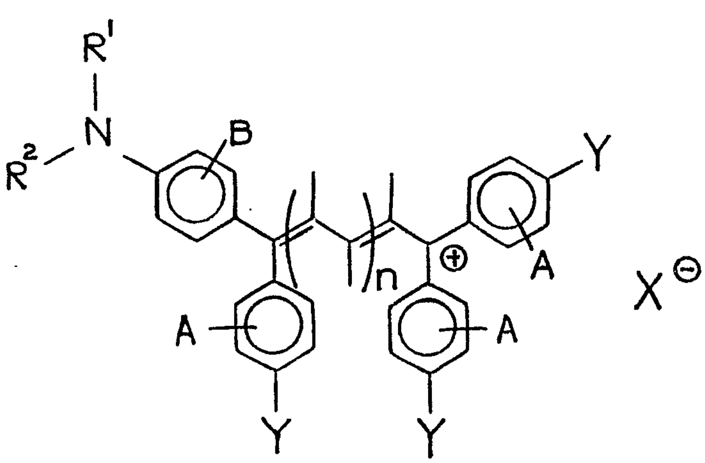

Page 27 Claim 2

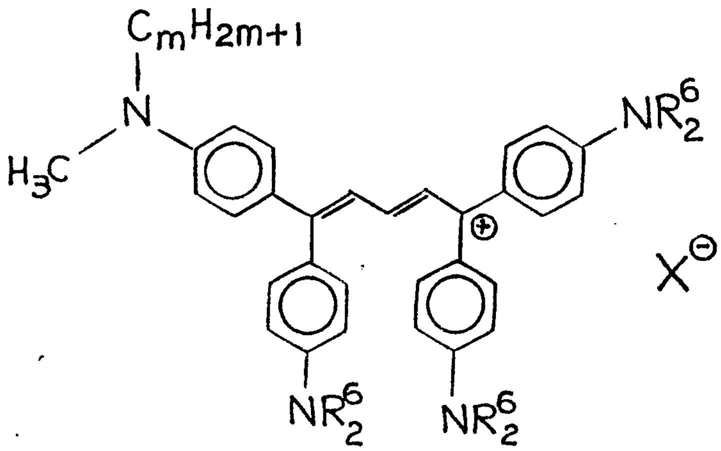

Page 28 Claim 4.

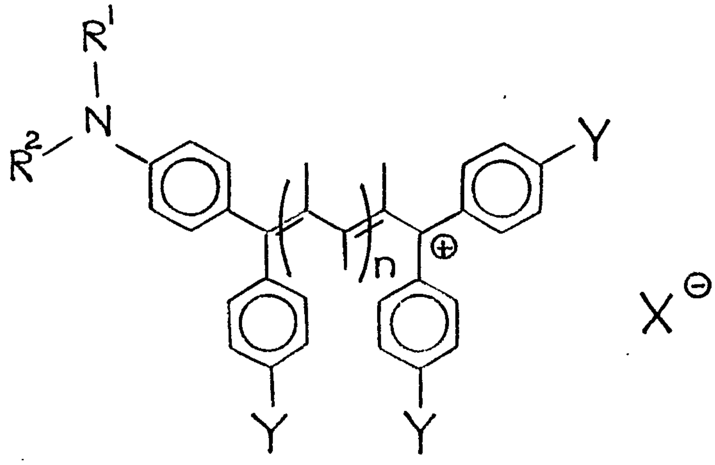

Abstract